# EUROPEAN PATENT SPECIFICATION

(11) **EP 4 437 049 B1**
(45) Date of publication and mention of the grant of the patent: **09.07.2025**
(21) Application number: 23802005.1
(22) Date of filing: 17.10.2023
(51) Int. Cl.: C09D 11/101, C09D 5/00, C09D 7/61, C09D 11/54, C09D 4/00, C09D 11/03, C09D 11/102

(54) **PRIMERS FOR ENERGY-CURABLE INKS AND COATINGS ON METALLIZED SUBSTRATES**
PRIMER FÜR ENERGIEHÄRTBARE TINTEN UND BESCHICHTUNGEN AUF METALLISIERTEN SUBSTRATEN
AMORCES POUR ENCRES ET REVÊTEMENTS DURCISSABLES PAR ÉNERGIE SUR DES SUBSTRATS MÉTALLISÉS

(30) Priority: 25.10.2022 US 202263419056 P
(43) Date of publication of application: 02.10.2024
(73) Proprietor: Sun Chemical Corporation, Parsippany, NJ 07054 (US)
(72) Inventor: KRISHNAN, Ramasamy, Carlstadt, New Jersey 07072 (US); SCHNEIDER, Mark, Carlstadt, New Jersey 07072 (US); KLEIN, David, Carlstadt, New Jersey 07072 (US)
(74) Representative: Carpmaels & Ransford LLP
(86) International application number: PCT/US2023/035273
(87) International publication number: WO 2024/091400

(56) References cited:
- CN-A- 108 976 900
- CN-A- 111 320 895
- US-A1- 2003 109 595
- US-A1- 2003 130 371
- US-A1- 2011 060 069

## Description

### CROSS REFERENCE TO RELATED APPLICATIONS

The present application claims priority to US Provisional Application No. 63/419,056, filed 25-October-2022.

### FIELD OF THE INVENTION

The present invention is related to primer compositions for metal and metallized substrates. The energy-curable primer coating compositions, when applied to metal or metallized surfaces, promote the adhesion of subsequently printed energy-curable inks and coatings.

### BACKGROUND OF THE INVENTION

Energy curable (EC) inks and coatings typically do not adhere to metal and metallized surfaces, creating the need for primers which are printed onto the metallized substrate and are subsequently overprinted with EC inks and coatings. Currently, these primers are solvent-based and there is a need in the industry for the development of EC primer coatings to replace solvent-based primer coatings.
US 2003/130371 relates to a radiation curable aqueous coating composition that comprises an aqueous resin having a chemically bonded phosphate group and an ethylenic unsaturated double bond, and/or a phosphate compound having an ethylenic unsaturated double bond and an aqueous resin having an ethylenic unsaturated double bond, which has high solvent resistance and adhesion to the surface of the metal material.

US 8,399,534 refers to the use of phosphoric acid in primers, coatings, and ink compositions in the amount of 0.01 wt % to 0.5wt %. However, the compositions are not water-based.

US 11,267,977 refers to an EC ink or coating composition comprising an acid where the acid could include phosphoric acid or phosphoric acid derivatives. However, the compositions are not water-based.

WO 2020/212488 relates to a primer for EB curable compositions for corona treated PET films printed offset. The primers discussed in the present invention record are energy curable compositions for metallized substrates and the printing method is flexographic. However, the compositions are not water-based and do not contain oligomers modified with phosphoric acid.

US 3,014,822 relates to producing solvent-based gravure inks with good adhesion to aluminum by employing ink compositions containing phosphoric acid.

WO 2019/204880 describes a water-based product with acidic hydrogen coming from carboxylic acid groups, and metal salts comprising zinc or magnesium.

US 11,643,562 discloses water-based energy-curable compositions comprising polyurethane dispersions and phosphate esters. However, the coatings comprising phosphate esters only work well for flexible films such as polypropylene, and do not adhere to metal or metallic substrates.

WO 2022/109230 provides a two part ink or coating system. Part A comprises hydroxyl functional resins, aminoplast crosslinkers, polyester polyols, and solvents. Part B comprises acid catalysts. The compositions are preferably contain no water, and are not energy-curable.

US 11,359,102 discloses UV-curable ink and coating compositions comprising photopolymerizable monomers and/or oligomers, cleavage type photoinitiators, and acids. The acids may be added directly (e.g. sulphonic, phosphoric, phosphonic) or generated by a photoinitiator generator (PAG) during the UV-curing process. The compositions do not contain water or polyurethane dispersions.

US 8,372,516 discloses compositions comprising (meth)acrylate phosphonic esters as adhesion promoters. The compositions comprise at least one (meth)acrylate prepolymer, and a (meth)acrylate phosphonic ester compound. A preferred (meth)acrylate prepolymer is a urethane (meth)acrylate. The compositions may be solvent-borne or water-borne. The compositions have good adhesion to metal. The compositions of US 8,372,516 do not contain inert resins.

Citation or identification of any document in this application is not an admission that such represents prior art to the present invention.

### BRIEF SUMMARY OF THE INVENTION

The present invention provides water-based energy-curable primers that exhibit good adhesion to metallized substrates, and are receptive to EC inks printed over the top.

The present invention is defined in claim 1 and provides a water-based energy-curable primer composition comprising:
(a) 35 wt% to 80 wt% one or more water-compatible ethylenically unsaturated monomers, ethylenically unsaturated oligomers, or a combination thereof, based on the total weight of the composition;
(b) 3 wt% to 12 wt% one or more water-based polyurethane dispersions, based on the total weight of the composition;
(c) 2 wt% to 10 wt% one or more photoinitiators, based on the total weight of the composition; and
(d) phosphoric acid.

In some embodiments, phosphoric acid is added directly to the composition.

In other embodiments, the phosphoric acid is added to the composition in the form of phosphoric acid modified monomers or oligomers.

When the compositions of the invention are used as primers, subsequently printed energy-curable inks printed on top of the composition exhibit improved adhesion to substrates, particularly metal or metallized substrates.

These and other objects, advantages, and features of the invention will become apparent to those persons skilled in the art upon reading the details of the formulations and methods as more fully described below.

### DETAILED DESCRIPTION OF THE INVENTION

The present invention provides water-based energy-curable primer compositions that exhibit good adhesion to metallized substrates, and are receptive to EC inks printed on top of the primers. The printed construct (primer + EC inks and/or coatings) are resistant to being removed by common adhesive tapes. In a preferred embodiment, when the printed construct (primer + EC inks/coatings) is used in a laminated construct, the printed construct would either exhibit a lamination bond strength value of equal to or greater than 100 g/linear-inch. More preferably, the printed construct would not be removed from a metallized substrate without destroying the metal substrate. This is known as a destruct bond, e.g. it would require destruction of the substrate to actually remove the printed layers.

It is to be understood that the foregoing general description and the following detailed description are exemplary and explanatory only, and are not restrictive of any subject matter claimed.

Headings are used solely for organizational purposes, and are not intended to limit the invention in any way.

Unless otherwise defined, all technical and scientific terms used herein have the same meaning as is commonly understood by one of skill in the art to which the inventions belong. Although any methods and materials equivalent to those described herein can be used in the practice or testing of the present invention, the scope of the invention is limited by the claims and the preferred methods are described

### Definitions

In this application, the use of the singular includes the plural unless specifically stated otherwise. As used herein, the singular forms "a," "an" and "the" are intended to include the plural forms as well, unless the context clearly indicates otherwise.

In this application, the use of "or" means "and/or" unless stated otherwise. Also, when it is clear from the context in which it is used, "and" may be interpreted as "or," such as in a list of alternatives where it is not possible for all to be true or present at once.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."

When the terms "consist of", "consists of" or "consisting of" is used in the body of a claim, the claim term set off with "consist of", "consists of" and/or "consisting of" is limited to the elements recited immediately following "consist of", "consists of" and/or "consisting of", and is closed to unrecited elements related to that particular claim term. The term 'combinations thereof', when included in the listing of the recited elements that follow "consist of", "consists of" and/or "consisting of" means a combination of only two or more of the elements recited.

As used herein, ranges and amounts can be expressed as "about" a particular value or range. "About" is intended to also include the exact amount. Hence "about 5 percent" means "about 5 percent" and also "5 percent." "About" means within typical experimental error for the application or purpose intended.

It is to be understood that wherein a numerical range is recited, it includes the end points.

Throughout this disclosure, all parts and percentages are by weight (wt% or mass% based on the total weight) and all temperatures are in °C unless otherwise indicated.

As used herein, "substrate" means any surface or object to which an ink or coating can be applied. Substrates include, but are not limited to, cellulose-based substrates, paper, paperboard, fabric (e.g. cotton), leather, textiles, felt, concrete, masonry, stone, plastic, plastic or polymer film, spunbond non-woven fabrics (e.g. consisting of polypropylene, polyester, and the like) glass, ceramic, metal, wood, composites, combinations thereof, and the like. Substrates may have one or more layers of metals or metal oxides, or other inorganic materials. Particularly preferred are non-woven substrates.

As used herein, the term "article" or "articles" means a substrate or product of manufacture. Examples of articles include, but are not limited to: substrates such as cellulose-based substrates, paper, paperboard, plastic, plastic or polymer film, glass, ceramic, metal, composites, and the like; and products of manufacture such as publications (e.g. brochures), labels, and packaging materials (e.g. cardboard sheet or corrugated board), containers (e.g. bottles, cans), a polyolefin (e.g. polyethylene or polypropylene), a polyester (e.g. polyethylene terephthalate), a metalized foil (e.g. laminated aluminum foil), metalized polyester, a metal container, and the like.

As used herein, "inks and coatings," "inks," and "coatings" are used interchangeably, and refer to compositions of the invention, or, when specified, compositions found in the prior art (comparative). Inks and coatings typically contain resins, solvent, and, optionally, colorants. Coatings are often thought of as being colorless or clear, while inks typically include a colorant.

As used herein, "energy-curing" refers to the cure achieved under exposure to various electromagnetic radiation sources producing an actinic effect. Such sources include but are not limited to, electron-beam, UV-light, visible-light, IR, or microwave. Where the compositions are cured under the action of UV light, then non-limiting UV sources such as the following can be used: low pressure mercury bulbs, medium pressure mercury bulbs, a xenon bulb, excimer lamps, a carbon arc lamp, a metal halide bulb, a UV-LED lamp or sunlight. It should be appreciated by those skilled in the art that any UV light source may be used to cure compositions prepared according to the current invention. Compositions of the current invention are especially suited for use in compositions curable under the action of UV light and/or electron-beam.

As used herein, "energy-curable" refers to a composition that can be cured by exposure to one or more types of actinic radiation. Compositions of the current invention are especially suited for use in compositions curable under the action of UV light and/or electron-beam.

As used herein, "(meth)acrylate" and "(meth)acrylic acid" include both acrylate and methacrylate, and acrylic and methacrylic acid.

As used herein, "monofunctional" means having one functional group.

As used herein, "multifunctional" means having two or more functional groups. A multifunctional monomer, for example, can be di-functional, tri-functional, tetra-functional, or have a higher number of functional groups. The two or more functional groups can be the same or different. Unless specified otherwise, as used herein, "multifunctional" refers to a compound having two or more of the same functional group, e.g. diacrylate.

As used herein, "monomer" refers to a small molecule having one or more functional groups. Monomers react with other monomers, either the same or different, to form monomer chains (oligomers and/or polymers). Each monomer in a chain is a monomer repeating unit. A monomer is the smallest unit that makes up an oligomer or a polymer. A monomer is a low molecular weight molecule, usually less than or equal to 100 Daltons weight average molecular weight (Mw).

As used herein, "oligomer" refers to a chain of a few monomer repeating units. Oligomers are a few to several monomer units long chains, and have a mid-range weight average molecular weight of about 100 Daltons to about 10,000 Daltons. Oligomers may have functional groups.

As used herein, "polymer" refers to a large molecule, containing multiple monomer and/or oligomer repeating units. Polymers are high molecular weight molecules, having a weight average molecular weight of greater than about 10,000 Daltons. Polymers, for example acrylate modified polymers, may have functional groups. A polymer can also be referred to as a resin.

### Energy-curable Primer Compositions

A key feature of the compositions of the present invention is the use of phosphoric acid. Phosphoric acid can be introduced by using phosphoric acid modified oligomers. Alternatively, phosphoric acid can be added directly to a composition comprising water-compatible oligomers and/or water-based polyurethane dispersions.

In one embodiment, the water-based energy-curable primer compositions of the present invention would exhibit good adhesion to metallized films. In addition, they would provide a surface to which subsequently applied energy-curable inks or coatings would also exhibit good adhesion to the primed metallized film substrate.

Advantageously, the primers of the present invention would comprise phosphoric acid; phosphate acrylics; water-compatible monomers and/or oligomers; water-based polyurethane dispersions; and one or more photoinitiators. A further feature of the present invention is the use of these primers on metallized substrates.

There are various preferred materials shown in the examples, and the following description, but there is no specific limitation on the materials as long as the formulation contains phosphoric acid (phosphate), preferably in combination with one or more water-compatible oligomers; one or more water-based polyurethane dispersions; one or more phosphate acrylics; and one or more photoinitiators.

Below are examples of the raw materials that could be suitable for the ink and coating compositions of the present invention. However, it should be noted that there is no specific limitation on the materials.

### Ethylenically unsaturated energy-curable monomers/oligomers

Examples of suitable monofunctional ethylenically unsaturated monomers include, but are not limited, to the following: isobutyl acrylate; cyclohexyl acrylate; iso-octyl acrylate; n-octyl acrylate; isodecyl acrylate; iso-nonyl acrylate; octyl/decyl acrylate; lauryl acrylate; 2-propyl heptyl acrylate; tridecyl acrylate; hexadecyl acrylate; stearyl acrylate; iso-stearyl acrylate; behenyl acrylate; tetrahydrofurfuryl acrylate; 4-t.butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; cumyl phenoxyethyl acrylate; cyclic trimethylolpropane formal acrylate; 2(2-ethoxyethoxy) ethyl acrylate; polyethylene glycol monoacrylate; polypropylene glycol monoacrylate; caprolactone acrylate; ethoxylated methoxy polyethylene glycol acrylate; methoxy triethylene glycol acrylate; tripropyleneglycol monomethyl ether acrylate; diethyleneglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; N-(acryloyloxyethyl)hexahydrophthalimide; N-butyl 1,2 (acryloyloxy) ethyl carbamate; acryloyl oxyethyl hydrogen succinate; octoxypolyethylene glycol acrylate; octafluoropentyl acrylate; 2-isocyanato ethyl acrylate; acetoacetoxy ethyl acrylate; 2-methoxyethyl acrylate; dimethyl aminoethyl acrylate; 2-carboxyethyl acrylate; 4-hydroxy butyl acrylate; combinations thereof, and the like. As used herein, the term ethoxylated refers to chain extended compounds through the use of ethylene oxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts.

Examples of suitable multifunctional ethylenically unsaturated monomers include but are not limited to the following: 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5- pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; tripropyleneglycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 1,4-butanediylbis[oxy(2-hydroxy-3,1-propanediyl)]diacrylate; ethoxylated bisphenol A diacrylate; propoxylated bisphenol A diacrylate; propoxylated ethoxylated bisphenol A diacrylate; ethoxylated bisphenol F diacrylate; 2-(2-vinyloxyethoxy)ethyl acrylate; dioxane glycol diacrylate; ethoxylated glycerol triacrylate; glycerol propoxylate triacrylate; pentaerythritol triacrylate; trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; e-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaacrylate; dipentaerythritol hexaaacrylate; ethoxylated dipentaerythritol hexaacrylate; combinations thereof, and the like. The term ethoxylated refers to chain extended compounds through the use of ethylene oxide, propoxylated refers to chain extended compounds through the use of propylene oxide, and alkoxylated refers to chain extended compounds using either or both ethylene oxide and propylene oxide. Equivalent methacrylate compounds are also capable of being used, although those skilled in the art will appreciate that methacrylate compounds have lower reactivity than their equivalent acrylate counterparts.

Other functional monomer classes capable of being used in part in these formulations include cyclic lactam such as N-vinyl caprolactam; N-vinyl oxazolidinone and N-vinyl pyrrolidone, and secondary or tertiary acrylamides such as N-acryloyl morpholine; diacetone acrylamide; N-methyl acrylamide; N-ethyl acrylamide; N-isopropyl acrylamide; N-t-butyl acrylamide; N-hexyl acrylamide; N-cyclohexyl acrylamide; N-octyl acrylamide; N- t-octyl acrylamide; N-dodecyl acrylamide; N-benzyl acrylamide; N-(hydroxymethyl)acrylamide; N-isobutoxymethyl acrylamide; N- butoxymethyl acrylamide; N,N-dimethyl acrylamide; N,N-diethyl acrylamide; N,N-propyl acrylamide; N,N-dibutyl acrylamide; N,N-dihexyl acrylamide; N,N-dimethylamino methyl acrylamide; N,N-dimethylamino ethyl acrylamide; N,N-dimethylamino propyl acrylamide; N,N-dimethylamino hexyl acrylamide; N,N-diethylamino methyl acrylamide; N,N-diethylamino ethyl acrylamide; N,N-diethylamino propyl acrylamide; N,N-dimethylamino hexyl acrylamide; and N,N'-methylenebisacrylamide.

Energy-curable oligomers, comprising several units of any of the aforementioned monomers, are also understood to be included in the list of energy-curable compounds.

The compositions of the invention comprise 35 wt% to 80 wt% ethylenically unsaturated energy-curable monomers and/or oligomers, based on the total weight of the composition. Note that the amount (wt%) is the total amount of monomers and/or oligomers, i.e. the sum of all the monomers and oligomers included in the composition.

### Phosphoric acid component

A key feature of the present invention is the use of phosphoric acid. This can be introduced by using phosphoric acid modified oligomers or monomers. Phosphoric acid modified oligomers include, but are not limited to, (meth)acrylate phosphate esters, (meth)actylatephosphates, (meth)acrylatephosphites, (meth)acrylatealkylphosphonic acids, and the like. Alternatively, phosphoric acid can be added directly to a composition comprising water compatible oligomers and water-based polyurethane dispersions.

Phosphoric acid modified monomers/oligomers include, but are not limited to, phosphoric acid acrylate; 2-(phosphonooxy)ethyl acrylate; diethyl 2-(methacryloyloxy) ethyl phosphate (DMP); glycerol phosphate dimethacrylate; 10-methacryloyloxydecyl dihydrogen phosphate (MDP); 2-hydroxyethyl methacrylate phosphate ester; phosphoric acid 2-hydryoxyethyl methacrylate ester; dipentaerythritol penta-acrylate phosphate; phosphate tris-hydroxyethyl cardanol epoxy acrylate; 6-methacryloxyhexyl phosphonoacetate (6-MHPA); acidphosphoxyethyl methacrylate; acidphosphoxypolyoxyethylene glycol methacrylate; acidphosphoxypolyoxypropylene glycol methacrylate; and combinations thereof.

Suitable commercially available phosphoric acid modified oligomers include, but are not limited to, Ebecryl 170 from Allnex; Cat. No. 695890 (phosphoric acid 2-hydroxyethyl methacrylate ester from Sigma Aldrich); Cat. No. FA175004 (alkyl acrylate phosphate stabilized with MEHQ from Biosynth); Cat. No. 22468-10 (phosphoric acid 2-hydroxyethyl acrylate ester, from Polysciences); Harcryl^{®} 1228M (free acid phosphate ester of 2-hydroxyethyl methacrylate, from Harcros Chemicals, Inc.); JPA-514 (2-hydroxyethyl methacrylate acid phosphate, from Kowa American Corporation); and X 744-0000 HEMA Phosphate (2-hydroxyethylmethacrylate acid phosphate, from Esstech).

### Polyurethane dispersions

The polyurethane dispersions of the present invention contain inert polyurethane resin. The inert polyurethane resins have no photocurable acrylic groups, and typically have a number average molecular weight of 1000 to 50,000 Daltons. Preferably the polyurethane has a number average molecular weight of about 14,000 to 22,000 Daltons, such as between 1000 and 4000 Daltons.

Suitable polyurethane dispersions include, but are not limited to, polyester polyurethane, polyether polyurethane, polycarbonate polyurethane, or polyamide polyurethane. The polyurethanes can be either aliphatic or aromatic. In some embodiments, the polyurthanes have functional groups, including, but not limited to, hydroxyl, carboxyl, substituted amine, and the like. In some embodiments, the polyurethane dispersions may contain a co-solvent (e.g. NMP) with the water. Suitable commercially available polyurethane dispersions include, but are not limited to, Sun Chemical 9R00-82, from Sun Chemical Corporation; U 228, U 3200, U 400 N, and U 4000, all from Alberdingk Boley; Bondthane^{™} UD-250, UD-211, and UD-270, which typically contain co-solvents, all from Bond Polymers International; Dispurez 201, from Incorez; Kamthane K-9473 (with 9% NMP co-solvent), from Kamsons Chemicals PVT. Ltd; and the like.

The compositions of the invention comprise 3 wt% to 12 wt% total polyurethane dispersions, based on the total weight of the composition. Note that the amount is the total amount of polyurethane dispersions in the composition, i.e. the sum of all of the polyurethane dispersions included in the composition. The water-based polyurethane dispersions typically have solids contents of about 20 wt% to about 80 wt%, based on the total weight of the dispersion. Thus, the total amount of solid polyurethane resin typically ranges from about 0.09 wt%, up to about 9.6 wt%, based on the total weight of the composition.

### Resins / inert resins

The radiation-curable compositions of the present invention may contain additional inert, non-curable resins having no curable acrylic groups with a number average molecular weight of 1000 to 30,000 Daltons, preferably 1000 to 4000 Daltons. Such additional inert resins include, but are not limited to, poly(acrylates), poly(ester), poly(amides), ketone resins, aldehyde resins, alkyd resins, phenol-formaldehyde resins, rosin resins, hydrocarbon resins, alkyd resins, or mixtures of the aforementioned. For example, resins may include alkyds, phenolics, nitrocellulose, polyamides, vinyls, acrylics, rosin esters, hydrocarbons, polyurethanes, epoxies, polyesters, styrenes, urea, and melamine-formaldehydes. Such resins improve pigment wetting, gloss, rheology, and flexibility.

When present, the additional resins / inert resins are typically present in the compositions of the present invention in an amount of about 2 wt% to about 10 wt%, based on the total weight of the composition. Note that the amount is the total amount of resins/inert resins in the composition, i.e. the sum of all of the additional resins/inert resins (i.e. not including the polyurethane resin described above) included in the composition.

### Photoinitiators

There is no restriction on the type, blend or concentration of photoinitiator used and can include any suitable type of photoinitiators, such as, but not limited to: α-hydroxyketones, acyl phosphine oxides, α-aminoketones, thioxanthones, benzophenones, phenylglyoxylates, oxime esters, and combinations thereof.

Suitable α-hydroxyketones include, but are not limited to: 1-hydroxy-cyclohexyl-phenyl-ketone; 2-hydroxy-2-methyl-1-phenyl-1-propanone; 2-hydroxy-2-methyl-4'-tert-butyl-propiophenone; 2-hydroxy-4'-(2-hydroxyethoxy)-2-methyl-propiophenone; 2-hydroxy-4'-(2-hydroxypropoxy)-2-methyl-propiophenone; oligo 2-hydroxy-2-methyl-1-[4-(1-methylvinyl)phenyl]propanone; bis[4-(2-hydroxy-2-methylpropionyl)phenyl]methane; 2-hydroxy-1-[1-[4-(2-hydroxy-2-methylpropanoyl)phenyl]-1,3,3-trimethylindan-5-yl]-2-methylpropan-1-one; 2-hydroxy-1-[4-[4-(2-hydroxy-2-methylpropanoyl)phenoxy]phenyl]-2-methylpropan-1-one; and combinations thereof.

Suitable acylphosphine oxides include, but are not limited to: 2,4,6-trimethylbenzoyldiphenylphosphine oxide; ethyl-(2,4,6-trimethylbenzoyl)phenyl phosphinate; bis-(2,4,6-trimethylbenzoyl)-phenylphosphine oxide; and combinations thereof.

Suitable α-aminoketones include, but are not limited to: 2-methyl-1-[4-methylthio)phenyl]-2-morpholinopropan-1-one; 2-benzyl-2-dimethylamino-1-(4-morpholinophenyl)-butan-1-one; 2-dimethylamino-2-(4-methyl-benzyl)-1-(4-morpholin-4-yl-phenyl)-butan-1-one; and combinations thereof.

Suitable thioxanthones include, but are not limited to: 2-4-diethylthioxanthone, isopropylthioxanthone, 2-chlorothioxanthone, and 1-chloro-4-propoxythioxanthone; and combinations thereof.

Suitable benzophenones include, but are not limited to: benzophenone, 4-phenylbenzophenone, and 4-methylbenzophenone; methyl-2-benzoylbenzoate; 4-benzoyl-4-methyldiphenyl sulphide; 4-hydroxybenzophenone; 2,4,6-trimethyl benzophenone, 4,4-bis(diethylamino)benzophenone; benzophenone-2-carboxy(tetraethoxy)acrylate; 4-hydroxybenzophenone laurate; 1-[-4-[benzoylphenylsulpho]phenyl]-2-methyl-2-(4-methylphenylsulphonyl)propan-1-one; and combinations thereof.

Suitable phenylglyoxylates include, but are not limited to: phenyl glyoxylic acid methyl ester; oxy-phenyl-acetic acid 2-[hydroxyl-ethoxy]-ethyl ester; oxy-phenyl-acetic acid 2-[2-oxo-2-phenyl-acetoxy-ethoxy]-ethyl ester; and combinations thereof.

Suitable oxime esters include, but are not limited to: 1-phenyl-1,2-propanedione-2-(O-ethoxycarbonyl)oxime; [1-(4-phenylsulfanylbenzoyl)heptylideneamino]benzoate; [1-[9-ethyl-6-(2-methylbenzoyl)carbazol-3-yl]-ethylideneamino]acetate; and combinations thereof.

Examples of other suitable photoinitiators include diethoxy acetophenone; benzil; benzil dimethyl ketal; titanocen radical initiators such as titanium-bis( 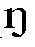 5-2,4-cyclopentadien-1-yl)-bis-[2,6-difluoro-3-(1H-pyrrol-1-yl)phenyl]; 9-fluorenone; camphorquinone; 2-ethyl anthraquinone; and the like.

Polymeric photoinitiators and sensitizers are also suitable, including, for example, polymeric aminobenzoates (GENOPOL AB-1 or AB-2 from RAHN; Omnipol ASA from IGM or Speedcure 7040 from Lambson), polymeric benzophenone derivatives (GENOPOL BP-1 or BP-2 from RAHN; Omnipol BP, Omnipol BP2702 or Omnipol 682 from IGM or Speedcure 7005 from Lambson); polymeric thioxanthone derivatives (GENOPOL TX-1 or TX-2 from RAHN, Omnipol TX from IGM or Speedcure 7010 from Lambson); polymeric aminoalkylphenones such as Omnipol 910 from IGM; polymeric benzoyl formate esters such as Omnipol 2712 from IGM; and the polymeric sensitizer Omnipol SZ from IGM.

The compositions of the present invention comprise a total amount of all photoinitiators (the sum of all photoinitiators in the composition) of 2 wt% to 10wt%, based on the total weight of the composition.

### EC Additives

The radiation-curable ink and coating compositions of the invention may contain the usual additives to modify flow, surface tension, gloss, and abrasion resistance of the cured coating or printed ink. These additives may function as leveling agents, in-can stabilizers, wetting agents, slip agents, flow agents, dispersants, and de-aerators. Preferred additives include fluorocarbon surfactants, silicones, and organic polymer surfactants, and inorganic materials such as talc. As examples, the Tegorad product lines (Tegorad are trademarks and are commercially available products of Tego Chemie, Essen, Germany), and the Solsperse product lines (Solsperse are trademarks and are commercially available products of Lubrizol Company). When present, additives are typically each individually present in an amount of about 0.5 wt% to about 5 wt%, based on the total weight of the composition. The total amount of EC additives (i.e. sum of all EC additives included in the composition) is equal to or less than 5 wt%, based on the total weight of the composition.

### Cure mechanism

The radiation curable compositions of the present invention can be UV-cured by an actinic light source, such as for example UV-light, provided by a high-voltage mercury bulb, a medium-voltage mercury bulb, a xenon bulb, a carbon arc lamp, a metal halide bulb, a UV-LED lamp or sunlight. The wavelength of the applied irradiation is preferably within a range of about 200 to 500 nm, more preferably about 250 to 350 nm. UV energy is preferably within a range of about 30 to 3000 mJ/cm², and more preferably within a range of about 50 to 500 mJ/cm². In addition, the bulb can be appropriately selected according to the absorption spectrum of the radiation curable composition. Moreover, the inks of this invention can be cured under inert conditions.

Alternatively, the radiation curable compositions and inks of this invention can be cured by electron beam (EB). Commercially EB-dryers are available for example from Energy Science, Inc. of Wilmington, Mass, or from Advanced Electron Beams Inc. (AEB) of Wilmington, Mass. The energy absorbed, also known as the dose, is measured in units of kiloGrays (kGy), one kGy being equal to 1,000 Joules per kilogram. Usually, the electron beam dose should be within the range of 10 kGy to about 40 kGy for complete curing. With the radiation curable composition of this invention a radiation dose of 20-30 kGy at an oxygen level of < 200 ppm is usually sufficient to get a dry, solvent resistant coating or ink.

### Oligomers

Oligomers can be used as substances that provide the vehicle for the UV ink or coating. They are similar to monomers, except that they have already been partially polymerized, which makes them more viscous. During curing, the monomers react with the oligomers to create chains in three dimensions. In the printing industry, mainly resins/oligomers with acrylate functionality are used to provide the necessary reactivity to enable adequate cure for modern, high-speed presses.

The main classes of acrylated oligomers include epoxy acrylates; urethane acrylates; polyester acrylates; acrylic acrylates; hyperbranched polyester acrylates; waterborne UV polyerethane dispersions, and organic-inorganic hybrid materials.

### EXAMPLES

The present invention is further described by the following non-limiting examples, which further illustrate the invention, and are not intended to, nor should they be interpreted to, limit the scope of the invention.

### Examples 1 to 3. Energy-curable primers.

Examples 1 and 2 are energy-curable primers according to the present invention. The formulations of Examples 1 and 2 are shown in Table 1.

**Table 1. Examples 1 and 2 inventive primers**

| **Material** | **Description** | **Ex 1: Primer wt%** | **Ex. 2: Primer Wt%** |
|---|---|---|---|
| Sartomer CN132 | Water compatible oligomer | 37.5 | 78.5 |
| Sun Chemical 9R00-82 | Water-based polyurethane dispersion | 7.5 | 7.5 |
| Sigma Aldrich (H₃PO₄) | Phosphoric acid | | 7.0 |
| Allnex Ebecryl 170 | Phosphoric acid modified acrylic oligomer | 50 | 2.0 |
| IGM TPO-L | Photoinitiator | 5.0 | 5.0 |
| Total | | 100.0 | 100.0 |

Comparative Example 3 primer is Sun Chemical Commercial Primer NWUV-1560, comprising (meth)acrylated monomers and oligomers, photoinitiators, inhibitor, and surfactants, but which does not contain phosphoric acid.

### Example 4. Scotch tape adhesion testing.

Example 1, 2, and 3 primers were applied to the metallized (treated) side of a 16-micron metallized substrate using a 700 line/2.2 bcm anilox. The primer was cured by two passes under a UVEXS curing unit, for a total UV dose of 150 mJ/cm². An energy-curable cyan ink (FLNUV5482362 from Sun Chemical) was printed on top of the cured primer, at 300 line/5.0 bcm either directly onto the substrate or over the top of the primer (see Table 2). The ink was then cured with two passes under a UVEXS curing unit, for a total UV dose of 150 mJ/cm².

### Scotch tape adhesion test method

The printed and cured samples were placed on a hard surface. Tape was affixed to the cured print, using moderate to heavy finger pressure against the hard surface to provide a good seal. The tape was pulled from the print at an angle of 45° using a fast pull, with the print supported by holding it taut against the hard surface with thumb and forefinger. The tape adhesion test was conducted with three different tapes for each print: 600 tape, 610 tape, and 810 tape, all from 3M. The amount of ink removed was assessed as a percentage of the ink removed from the printed substrate. The prints were tested immediately after cure, and 18 hours after cure. The results of the tape adhesion test are shown in Table 2.

**Table 2. Scotch tape adhesion results**

| | | **Tape 600** | **Tape 610** | **Tape 810** |
|---|---|---|---|---|
| **¹Cyan w/o primer** | Immediate | 100% removal | 100% removal | 100% removal |
| | 18 hr. | 100% removal | 100% removal | 100% removal |
| | | | | |
| **¹Cyan with Inv. Ex. 1 primer** | Immediate | No removal | No removal | No removal |
| | 18 hr. | No removal | No removal | No removal |
| | | | | |
| **¹Cyan with Comp. Ex. 2 primer** | Immediate | No removal | No removal | No removal |
| | 18 hr. | No removal | No removal | No removal |
| | | | | |
| **¹Cyan with Comp. Ex. 3 primer** | Immediate | 100% removal | 100% removal | 100% removal |
| | 18 hr. | 100% removal | 100% removal | 100% removal |

| | | | | |
|---|---|---|---|---|
| ¹Cyan FLNUV5482362 ink (Sun Chemical) | | | | |

A passing result is less than 10% ink removal. The data in Table 2 clearly shows the improved adhesion to prints made on foil metallized substrates with the use of Examples 1 and 2 Inventive primers, compared to Example Comparative primer.

The present invention has been described in detail, including the preferred embodiments thereof.

## Claims

1. A water-based energy-curable primer composition comprising:
(a) 35 wt% to 80 wt% one or more water-compatible ethylenically unsaturated monomers, ethylenically unsaturated oligomers, or a combination thereof, based on the total weight of the composition;
(b) 3 wt% to 12 wt% one or more water-based polyurethane dispersions, based on the total weight of the composition;
(c) 2 wt% to 10 wt% one or more photoinitiators, based on the total weight of the composition; and
(d) phosphoric acid.

2. The water-based energy-curable primer composition of claim 1, wherein the phosphoric acid is added directly, or is introduced in the form of a phosphoric acid modified acrylic oligomer.

3. The water-based energy-curable primer composition of claim 2, wherein the phosphoric acid is added directly to the composition, in an amount of 2 wt% to 10 wt%, based on the total weight of the composition.

4. The water-based energy-curable primer composition of claim 2, wherein the phosphoric acid is introduced in the form of a phosphoric modified acrylic oligomer, wherein the amount of phosphoric modified acrylic oligomer is 1 wt% to 70 wt%, based on the total weight of the composition.

5. A printed construct comprising the primer of any preceding claim and one or more energy-curable inks and/or coatings.

6. A laminated construct comprising the printed construct of claim 5.

7. A method of preparing a printed construct, comprising:
(a) providing a substrate;
(b) applying the water-based energy-curable primer composition of any preceding claim on the substrate;
(c) curing the water-based energy-curable primer composition on the substrate;
(d) printing one or more energy-curable inks or coatings on top of the water-based energy-curable primer composition;
(e) curing the one or more energy-curable inks or coatings.

8. The printed construct as prepared by the method of claim 7, wherein the substrate is metal, or a metallized film substrate.

9. An article comprising the printed construct of claims 5 or 8.

## Patentansprüche

1. Energiehärtbare Grundierungszusammensetzung auf Wasserbasis, umfassend:
(a) 35 Gew.-% bis 80 Gew.-% an einem oder mehreren wasserverträglichen ethylenisch ungesättigten Monomeren, ethylenisch ungesättigten Oligomeren oder einer Kombination davon, bezogen auf das Gesamtgewicht der Zusammensetzung;
(b) 3 Gew.-% bis 12 Gew.-% an einer oder mehreren Polyurethandispersionen auf Wasserbasis, bezogen auf das Gesamtgewicht der Zusammensetzung;
(c) 2 Gew.-% bis 10 Gew.-% an einem oder mehreren Photoinitiatoren, bezogen auf das Gesamtgewicht der Zusammensetzung; und
(d) Phosphorsäure.

2. Energiehärtbare Grundierungszusammensetzung auf Wasserbasis nach Anspruch 1, wobei die Phosphorsäure direkt zugegeben wird oder in der Form eines phosphorsäuremodifizierten Acryloligomers eingeführt wird.

3. Energiehärtbare Grundierungszusammensetzung auf Wasserbasis nach Anspruch 2, wobei die Phosphorsäure in einer Menge von 2 Gew.-% bis 10 Gew.-%, bezogen auf das Gesamtgewicht der Zusammensetzung, direkt zu der Zusammensetzung zugegeben wird.

4. Energiehärtbare Grundierungszusammensetzung auf Wasserbasis nach Anspruch 2, wobei die Phosphorsäure in der Form eines phosphorhaltig modifizierten Acryloligomers eingeführt wird, wobei die Menge an phosphorhaltig modifiziertem Acryloligomer 1 Gew.-% bis 70 Gew.-%, bezogen auf das Gesamtgewicht der Zusammensetzung, beträgt.

5. Bedrucktes Konstrukt, umfassend die Grundierung nach einem der vorstehenden Ansprüche und eine oder mehrere energiehärtbare Tinten und/oder Beschichtungen.

6. Laminiertes Konstrukt, umfassend das bedruckte Konstrukt nach Anspruch 5.

7. Verfahren zur Herstellung eines bedruckten Konstrukts, umfassend:
(a) Bereitstellen eines Substrats;
(b) Aufbringen der energiehärtbaren Gundierungszusammensetzung auf Wasserbasis nach einem der vorstehenden Ansprüche auf das Substrat;
(c) Härten der energiehärtbaren Gundierungszusammensetzung auf Wasserbasis auf dem Substrat;
(d) Drucken einer oder mehrerer energiehärtbarer Tinten oder Beschichtungen auf die energiehärtbare Gundierungszusammensetzung auf Wasserbasis;
(e) Härten der einen oder mehreren energiehärtbaren Tinten oder Beschichtungen.

8. Bedrucktes Konstrukt, wie hergestellt durch das Verfahren nach Anspruch 7, wobei das Substrat Metall oder ein metallisiertes Foliensubstrat ist.

9. Gegenstand, umfassend das bedruckte Konstrukt nach Anspruch 5 oder 8.

## Revendications

1. Composition d'apprêt aqueuse durcissable par énergie, comprenant :
(a) 35 % en poids à 80 % en poids d'un ou plusieurs monomères éthyléniquement insaturés, oligomères éthyléniquement insaturés ou une combinaison de ceux-ci, compatibles avec l'eau, par rapport au poids total de la composition ;
(b) 3 % en poids à 12 % en poids d'une ou plusieurs résines d'acétate-butyrate de cellulose, par rapport au poids total de la composition ;
(c) 2 % en poids à 10 % en poids d'un ou plusieurs photoamorceurs, par rapport au poids total de la composition ; et
(d) de l'acide phosphorique.

2. Composition d'apprêt aqueuse durcissable par énergie selon la revendication 1, dans laquelle l'acide phosphorique est ajouté directement ou est introduit sous la forme d'un oligomère acrylique modifié par l'acide phosphorique.

3. Composition d'apprêt aqueuse durcissable par énergie selon la revendication 2, dans laquelle l'acide phosphorique est ajouté directement à la composition, dans une proportion de 2 % à 10 % en poids, par rapport au poids total de la composition.

4. Composition d'apprêt aqueuse durcissable par énergie selon la revendication 2, dans laquelle l'acide phosphorique est introduit sous la forme d'un oligomère acrylique modifié par l'acide phosphorique, la quantité d'oligomère acrylique modifié par l'acide phosphorique étant de 1 % à 70 % en poids, par rapport au poids total de la composition.

5. Construction imprimée comprenant l'apprêt selon l'une quelconque des revendications précédentes et une ou plusieurs encres et/ou un ou plusieurs revêtements durcissables par énergie.

6. Construction stratifiée comprenant la construction imprimée selon la revendication 5.

7. Procédé de préparation d'une construction imprimée, comprenant :
(a) l'obtention d'un substrat ;
(b) l'application de la composition d'apprêt aqueuse durcissable par énergie selon l'une quelconque des revendications précédentes sur le substrat ;
(c) le durcissement de la composition d'apprêt aqueuse durcissable par énergie sur le substrat ;
(d) l'impression d'une ou plusieurs encres ou d'un ou plusieurs revêtements durcissables par énergie sur la composition d'apprêt aqueuse durcissable par énergie ;
(e) le durcissement des une ou plusieurs encres ou un ou plusieurs revêtements durcissables par énergie.

8. Construction imprimée préparée par le procédé selon la revendication 7, dans laquelle le substrat est en métal ou un substrat de film métallisé.

9. Article comprenant la construction imprimée selon les revendications 5 ou 8.
